# EUROPÄISCHE PATENTSCHRIFT

(11) **EP 3 688 742 B1**
(45) Veröffentlichungstag und Bekanntmachung des Hinweises auf die Patenterteilung: **28.04.2021**
(21) Anmeldenummer: 18780073.5
(22) Anmeldetag: 26.09.2018
(51) Int. Cl.: G08G 1/0968

(54) **SYSTEM ZUR ERZEUGUNG UND/ODER AKTUALISIERUNG EINES DIGITALEN MODELLS EINER DIGITALEN KARTE**
SYSTEM FOR PRODUCING AND/OR UPDATING A DIGITAL MODEL OF A DIGITAL MAP
SYSTÈME POUR PRODUIRE ET/OU ACTUALISER UN MODÈLE NUMÉRIQUE D'UNE CARTE NUMÉRIQUE

(30) Priorität: 28.09.2017 DE 102017217297
(43) Veröffentlichungstag der Anmeldung: 05.08.2020
(73) Patentinhaber: Continental Automotive GmbH, 30165 Hannover (DE)
(72) Erfinder: GONSA, Osvaldo, 61352 Bad Homburg (DE); KÖRNER, Rene Alexander, 80339 München (DE)
(74) Vertreter: Continental Corporation
(86) Internationale Anmeldenummer: PCT/EP2018/076148
(87) Internationale Veröffentlichungsnummer: WO 2019/063628

(56) Entgegenhaltungen:
- DE-A1-102013 205 392
- DE-A1-102016 205 543

## Beschreibung

### TECHNISCHES GEBIET

Die Erfindung betrifft das Gebiet der Fahrassistenzsysteme. Die vorliegende Erfindung bezieht sich im Besonderen auf das Erfassen von Fahrwegdaten durch Sensoren eines Fahrzeugs und das Übertragen der erfassten Fahrwegdaten an eine fahrzeugexterne Datenbank.

### TECHNISCHER HINTERGRUND

Um Daten zu Fahrweg-Eigenschaften in einer Datenbank einer Backendrichtung, beispielsweise für autonomes oder teilautonomes Fahren, aktuell zu halten, müssen die Daten regelmäßig auf den neuesten Stand gebracht werden. Die Erfassung der Fahrweg-Eigenschaften kann von auf den Straßen fahrenden Fahrzeugen durchgeführt werden, die jeweils mit geeigneten Sensoren und einer Vorrichtung zur Erfassung der Geo-Position ausgestattet sind. Die erfassten Daten können dann über eine Fahrzeug-zu-X-Kommunikation oder eine Mobilfunkverbindung an die Datenbank der Backendeinrichtung gesendet werden, wo sie zu einem Datensatz konsolidiert werden, der dann an andere Fahrzeuge gesendet werden kann, z.B. für eine Routenberechnung oder dergleichen. Die erfassten Daten können einen sehr Datenaufkommen von den Fahrzeugen zur Backendeinrichtung bewirken, wenn Aktualisierungsdaten von einer Vielzahl von Fahrzeugen an die Backendeinrichtung übermittelt werden. Liegt in der Backendeinrichtung bereits ein statistisch signifikanter aktualisierter konsolidierter Datensatz vor, so stellt dies eine Verschwendung von Kommunikationsressourcen dar, da ein weitere Erhöhung der Güte des konsolidierten Datensatzes über weitere Übertragungen von durch Fahrzeuge erfassten Daten nicht erreicht werden kann.

Das Dokument DE 10 2013 205 392 A1 beschreibt eine Backendeinrichtung zum Bereitstellen von Informationen für Fahrerassistenzfunktionen von Fahrzeugen. Das Dokument DE 10 2016 205 543 A1 beschreibt ein Verfahren und System zum Austauschen von digitalen Kartendaten zwischen mehreren Fahrzeugen in Abhängigkeit von einem Gütemaß.

### OFFENBARUNG DER ERFINDUNG

Es ist daher Aufgabe der Erfindung, ein System zur Erzeugung bzw. Aktualisierung eines digitalen Modells einer digitalen Karte anzugeben, das zuverlässig ist und sicher arbeitet.

Diese Aufgabe wird mit einem System gemäß dem unabhängigen Systemanspruch gelöst. Die abhängigen Ansprüche betreffen besondere Ausgestaltungen.

Ein Aspekt betrifft ein System zur Erzeugung und/oder Aktualisierung eines digitalen Modells zumindest eines Teilbereichseiner digitalen Karte, wobei eine zweiseitige Datenverarbeitung vorgenommen wird. Ein Teil der Datenverarbeitung wird in einem oder mehreren Fahrzeugen vorgenommen. Ein weiterer Teil der Datenverarbeitung wird in einer Backendeinrichtung vorgenommen. Das System weist fahrzeugseitig auf eine Fahrzeugdatenbank mit fahrzeugseitigen Kartendaten, welche zumindest einen Teilbereich der digitalen Karte abbilden, die auch in einer Serverdatenbank in der Backendeinrichtung gespeichert ist. Darüber hinaus weist das System fahrzeugseitig einen oder mehrere Sensoren zur Erfassung von Fahrzeugumfelddaten auf sowie einen oder mehrere Prozessoren, welche eingerichtet sind, aus den Fahrzeugumfelddaten zumindest ein Snippet zu erzeugen. Bei dem Snippet handelt es sich um Teilmodell der digitalen Karte, welches Objektdaten von Fahrzeugumfeldobjekten enthält. Es kann sich um ein CAD (computer aided design) Modell eines bspw. 100m x 100m großen Kartenabschnitts handeln, welches bspw. aus einer Abfolge von Kamerabildern errechnet wird. Die einen oder mehreren Prozessoren sind darüber hinaus eingerichtet, aus dem Snippet Aktualisierungsdaten des Teilbereichs der digitalen Karte zu ermitteln, wenn ein Ereignis in Form einer Differenz zwischen Objekten in den Kartendaten und Objekten in dem Snippet vorliegt. Bei dem Ereignis kann es sich bspw. um ein neu hinzugekommenes Fahrzeugumfeldobjekt handeln, wie eine Fahrbahnsperrung oder ein temporär aufgestelltes Straßenschild handeln. Fahrzeugseitig sind zudem Mittel zur Bestimmung einer räumlichen Position des Ereignisses vorhanden, bspw. ein GPS-Empfänger zur Bestimmung der Fahrzeugposition oder ein Radarsensor zusätzlich zur Bestimmung der räumlichen Position des Ereignisses relativ zum Fahrzeug. Fahrzeugseitig ist zudem eine Sende-und Empfangseinrichtung vorgesehen, welche eingerichtet ist, ein positives Token oder ein negatives Token von einer Backendeinrichtung zu empfangen und an die Fahrzeugdatenbank zu übermitteln und welche ferner eingerichtet ist, die Aktualisierungsdaten mit dem Ereignis und zugehöriger räumlicher Position an die Backendeinrichtung zu übermitteln, wenn sich die fahrzeugseitige Datenbank in Bezug auf die räumliche Position des Ereignisses in einem Standardmodus befindet oder wenn im Speicher ein positives Token vorliegt. Wenn hingegen ein negatives Token vorliegt, so werden Aktualisierungsdaten lediglich bei Wegfall des Ereignisses an die Backendeinrichtung übertragen werden. Der Standardmodus betrifft ein Zustand der fahrzeugseitigen Datenbank, in welchem bezüglich einer bestimmten räumlichen Position des Fahrzeuges bei erstmaliger Detektion eines Ereignisses durch ein Fahrzeug dieses Aktualisierungsdaten an die Fahrzeugdatenbank übertragt. Im Standardmodus der Fahrzeugdatenbank liegt das Ereignis mithin noch nicht im Backend vor.

Das System weist backendseitig eine Backendeinrichtung auf. Diese beinhaltet eine Serverdatenbank mit backendseitigen Kartendaten des digitalen Modells sowie eine Sende-/Empfangseinrichtung, welche eingerichtet ist, die Aktualisierungsdaten von einem oder mehreren Fahrzeugen zu empfangen. Darüber hinaus sind in der Backendeinrichtung ein oder mehrere Prozessoren vorgesehen, welche eingerichtet sind, die Aktualisierungsdaten statistisch zu bewerten und in Abhängigkeit der statistischen Bewertung eine Aktualisierung der backendseitigen Kartendaten vorzunehmen und in Abhängigkeit der statistischen Bewertung eine bestimmte Anzahl positiver und negativer Token zu erzeugen. Die Anzahl positiver Token kann hierbei so gewählt werden, dass das Ereignis durch eine hinreichend hohe Anzahl an Bestätigungen durch andere Fahrzeuge verifiziert wird, so dass in der Serverdatenbank lediglich Daten mit entsprechend hoher Konfidenz erzeugt bzw. aktualisiert werden. Die Sende- und Empfangseinrichtung der Backendeinrichtung ist ferner eingerichtet, die positiven oder negativen Token an eines oder mehrere Fahrzeuge zu übermitteln.

Das in der Serverdatenbank abgelegt digitale Modell kann insbesondere eine hochauflösende digitale Landkarte mit weiteren Umfeldelementen aufweisen. Die digitale Landkarte wird zumindest durch ein Strassenmodell gebildet, welches den Verlauf von Strecken und Fahrspuren beschreibt, und Informationen über Anzahl und Verlauf von Fahrstreifen, Kurvenradien, Steigungen, Kreuzungen und ähnliche Charakteristiken enthält.

Das digitale Modell kann insbesondere weitere statische oder dynamische Umfeldelemente umfassen. Statische Umfeldelemente betreffen Informationen über Position und Art von Fahrbahn- und Linienmarkierungen, etwa Haltelinien, Zebrastreifen, Mittelstreifen, Fahrbahnrandmarkierungen und ähnliches, das Vorhandensein von Randbebauungen, sowie deren Klasse und relative oder absolute Position, Information über Position und Art von Verkehrszeichen, oder Informationen über Art und Zustand von Lichtsignalanlagen oder Wechselverkehrszeichen. Dynamische Umfeldelemente betreffen insbesondere die Position und Geschwindigkeit von Fahrzeugen. Für jeden Parameter, insbesondere Position und Attribut, eines Umfeldelements, bpsw. der Position des Verkehrszeichens und der Art des Verkehrszeichens wird im Laufe einer Trainingsphase eine Statistik aus einer statistisch signifikanten Anzahl von Messungen bestimmt. Diese Statistik kann die Verteilung von Messwerten um einen Mittelwert reflektieren.

Den Aktualisierungsdaten kann nicht nur in Bezug auf die Anzahl von Messungen, d.h. Übertragungen durch Fahrzeugen, ein Signifikanzwert in der Backendeinrichtung zugeordnet werden, sondern diesen kann fahrzeugseitig bereits ein Konfidenzwert oder ein statistischer Parameter in Abhängigkeit von deren Güte zugeordnet werden, der sich bspw. aus der Qualität der Fahrzeugumfelddaten ergeben kann. So kann die Qualität der Fahrzeugumfelddaten bei schlechten Wetterbedingungen wie Nebel und starker Niederschlag geringer sein, als bei guten Wetterbedingungen, insbesondere wenn es sich bei den Fahrzeugumfelddaten um eine Abfolge von Kamerabildern handelt. Die Sende-/Empfangseinrichtung jedes Fahrzeuges kann eingerichtet sein, den fahrzeugseitig bestimmten Konfidenzwert oder den statistischen Parameter als Zusatzdaten zusätzlich zu den Aktualisierungsdaten an die Backendeinrichtung zu übermitteln.

Die Backeinrichtung kann die Aktualisierungsdaten auch ausschließlich statistisch bewerten. Die einen oder mehrere Prozessoren der Backendeinrichtung können eingerichtet sein, die Aktualisierungsdaten anhand der Anzahl der Fahrzeuge, welche die Aktualisierungsdaten übermittelt haben, und/oder der Anzahl der Übermittlungen statistisch zu bewerten und basierend auf der Anzahl der Fahrzeuge und/oder der Übermittlungen den Aktualisierungsdaten einen Konfidenzwert zuzuordnen.

Die Backendeinrichtung kann hierbei die fahrzeugseitig bestimmten Zusatzdaten bei der Bestimmung des Konfidenzwertes miteinbeziehen. Die einen oder mehrere Prozessoren der Backendeinrichtung können die Aktualisierungsdaten anhand der Anzahl der Fahrzeuge, welche die Aktualisierungsdaten übermittelt haben, und/oder der Anzahl der Übermittlungen, und anhand der Zusatzdaten bewerten.

Ein Aspekt des Systems betrifft die Erzeugung von positiven und negativen Token in der Backendeinrichtung. Die einen oder mehreren Prozessoren der Backendeinrichtung können eingerichtet sein, positive und negative Token zu erzeugen, wenn die Aktualisierungsdaten eine statistische Signifikanz aufweisen, die einen Mindestschwellwert überschreiten, wobei den positiven und negativen Token zumindest die räumliche Position des betreffenden Ereignisses und eine Ereignis-ID des betreffenden Ereignisses zugeordnet wird. Die Sende-/Empfangseinrichtung der Backendeinrichtung kann eingerichtet sein, die positiven und negativen Token an ein oder mehrere Fahrzeuge, insbesondere über ein Broadcast zu übermitteln.

Ein Aspekt des Systems betrifft die Behandlung der Detektion des Wegfalls des Ereignisses. Der Wegfall des Ereignisses, insoweit er als statistisch signifikant zu beurteilen ist, soll dazu führen, dass bezüglich dieses Ereignisses sämtliche positiven und negativen Token in allen Fahrzeugen gelöscht werden und die Fahrzeugdatenbank bezüglich dieses Ereignisses, d.h. insbesondere dessen räumliche Position in den Standardmodus zurückversetzt wird.

Die einen oder mehreren fahrzeugseitigen Prozessoren eingerichtet sind, den Wegfall des Ereignisses mit einer bestimmten räumlichen Position und zugeordneten Ereignis-ID zu detektieren, wenn eine negative Differenz zwischen Objekten in den Kartendaten und Objekten im Snippet vorliegt. Die fahrzeugseitige Sende-/Empfangseinrichtung kann eingerichtet sein, den Wegfall das Ereignisses in Form von Aktualisierungsdaten an die Backendeinrichtung zu übermitteln, wenn im fahrzeugseitigen Speicher ein negatives Token vorliegt. Es melden mithin lediglich Fahrzeuge den Wegfall des Ereignisses, deren Fahrzeugdatenbank bezüglich dieses Ereignisses ein negatives Token aufweist.

Die einen oder mehreren Prozessoren der Backendeinrichtung eingerichtet können eingerichtet sein, eine Nachricht zu erzeugen, welche die fahrzeugseitige Datenbank in den Standardmodus bezüglich der räumlichen Position und Ereignis-ID des Ereignisses, welches weggefallen ist, zu versetzen, wenn die Aktualisierungsdaten eine statistische Signifikanz aufweisen, die einen Mindestschwellwert überschreitet. Die Sende-/Empfangseinrichtung der Backendeinrichtung eingerichtet kann eingerichtet sein, die Nachricht an eines oder mehrerer Fahrzeuge zu übermitteln. Daraufhin können einen oder mehreren fahrzeugseitigen Prozessoren positive oder negative Token bezüglich der räumlichen Position und/oder Ereignis-ID aus dem fahrzeugseitigen Speicher zu entfernen und die Fahrzeugdatenbank bezüglich des weggefallenen Ereignisses in den Standardmodus zurückversetzen.

Ein Aspekt betrifft die räumliche Verteilung von positiven und negativen Token an die Fahrzeuge. Die Sende- und Empfangseinrichtung der Backendeinrichtung kann eingerichtet sein, die positiven oder negativen Token an eines oder mehrere Fahrzeuge zu übermitteln, welche sich in räumlicher Nähe des Ereignisses befinden.

Ein Aspekt betrifft die Verteilung der aktualisierten backendseitigen Kartendaten an Fahrzeuge. Hierzu können die einen oder mehreren backendseitigen Prozessoren eingerichtet sein, die Serverdatenbank mit backendseitigen Kartendaten des digitalen Modells mit den Aktualisierungsdaten zu aktualisieren, wenn diese einen Konfidenzwert aufweisen, der einen Mindestschwellwert überschreitet. Die backendseitige Sende/Empfangseinrichtung kann eingerichtet sein, zumindest die Daten der aktualisierten Datenbank, welche sich auf das Ereignis beziehen, an Fahrzeuge zu übermitteln, die sich in räumlicher Nähe zu dem Ereignis befinden.

### KURZFASSUNG DER FIGUREN

Die Erfindung wird im Folgenden an Hand von Ausführungsbeispielen mit Bezug auf Figuren beschrieben. Es zeigen
- Fig. 1: ein Blockschaltbild eines Systems zur Erzeugung eines digitalen Modells; und
- Fig. 2: ein Flussdiagramm des Verfahrens für das Auftreten eines Ereignisses; und
- Fig. 3: ein Flussdiagramm des Verfahrens für den Wegfall des Ereignisses.

### DETAILLIERTE BESCHREIBUNG

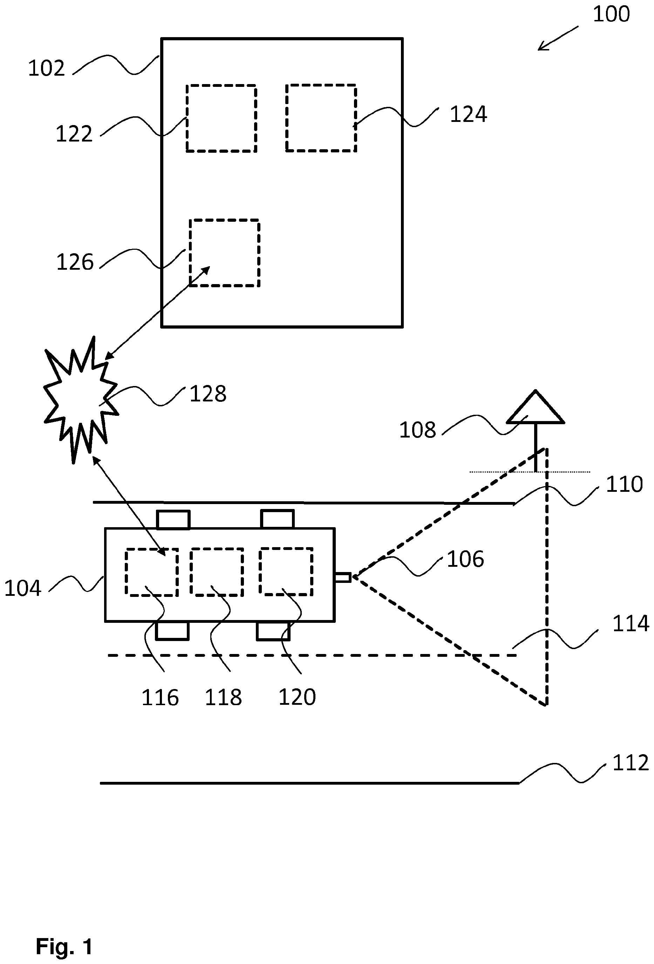

Fig. 1 zeigt ein System 100 zur Erzeugung und/oder Aktualisierung eines digitalen Modells einer digitalen Karte, das System bestehend aus einer Backendeinrichtung 102 und einem Fahrzeug 104 mit einem Sensor 106, welches sich auf einer durch zwei Fahrstreifen 110, 112 begrenzten Fahrbahn mit Mittelstreifen 114 bewegt. Das Fahrzeug 104 weist eine Sende/Empfangseinrichtung 116 zur Datenübertragung zu bzw. von der Backendeinrichtung 102 auf. Die Backendeinrichtung 102 weist ebenfalls eine Sende- und Empfangseinrichtung 126 zur Datenübertragung zum bzw. vom Fahrzeug 104 auf. Der eine am Fahrzeug 104 angebrachte Umfeldsensor 106 kann als Kamera ausgebildet sein, und Fahrzeugumfelddaten in Form eine Abfolge von Aufnahmen vom Fahrzeugumfeld zu erfassen, welche das Verkehrszeichen 108 beinhalten. Der Umfeldsensor kann zusätzlich als Radarsensor ausgebildet und eingerichtet sein, das Umfeld mittels Radar abzutasten. Auf diese Weise kann der Radarsensor 106 zusätzlich die Position eines Umfeldelements, bspw. des Verkehrszeichens 108, relativ zur räumlichen Position des Fahrzeugs bestimmt werden. In Verbindung mit einem GPS-Modul (nicht dargestellt) kann zudem die absolute räumliche Position Das Fahrzeug weist darüber hinaus einen Prozessor 120 auf, welcher eingerichtet ist, aus den Fahrzeugumfelddaten ein Snippet zu erzeugen. Ein Snippet ist ein ca. 100 x 100 m grosses Teilstück des digitalen Modells und stellt im Wesentlichen eine Objektmodellierung dar. Das Fahrzeug 104 weist darüber hinaus eine Fahrzeugdatenbank 118 mit fahrzeugseitigen Kartendaten auf, welche zumindest einen Teilbereich einer digitalen Karte abbilden. Der Prozessor 120 ist eingerichtet, das Snippet mit den entsprechenden fahrzeugseitigen Kartendaten aus der Fahrzeugdatenbank 118 zu vergleichen, um festzustellen, ob ein Ereignis in Form einer Differenz zwischen Objekten in den Kartendaten und den Objekten im Snippet vorliegt. In diesem Fall sei das Verkehrszeichen 108 noch nicht in den Kartendaten vorhanden, bspw. weil es kürzlich aufgestellt wurde. Somit ergibt der Vergleich das neu aufgestellte Verkehrszeichen 108 als Ereignis. Dieses Ereignis ist der Backendeinrichtung momentan noch nicht bekannt, da es noch nicht an diese über das Kommunikationsnetzwerk kommuniziert wurde.

Das Fahrzeug 104 übermittelt das Ereignis in Form von Aktualisierungsdaten an die Backendeinrichtung 102, welche damit ihre Serverdatenbank 122 mit Serverseitigen Kartendaten des digitalen Modells aktualisieren kann. Das digitale Modell kann aus Snippets zusammengesetzt sein, die aus einer Vielzahl von Fahrzeugen stammen können. Es kann sich auch um ein parametrisierbares Umfeldmodell handeln. Die Parametrisierung kann im Laufe eines Lernprozesses durch eine statistisch signifikante Anzahl von Fahrzeugen erfolgen. Das parametrisierte Umfeldmodell stellt mithin backendseitige konsolidierte Fahrzeugumfeldinformation dar. Jedes Umfeldelement des Umfeldelements kann eine eigene Statistik hinsichtlich Position, Attributen und Detektionswahrscheinlichkeit aufweisen. Die Backendeinrichtung weist einen Prozessor 124 auf, welcher eingerichtet ist, die Aktualisierungsdaten statistisch zu bewerten und in Abhängigkeit der statistische Bewertung eine Aktualisierung der backendseitigen Kartendaten in der Serverdatenbank 122 vorzunehmen.

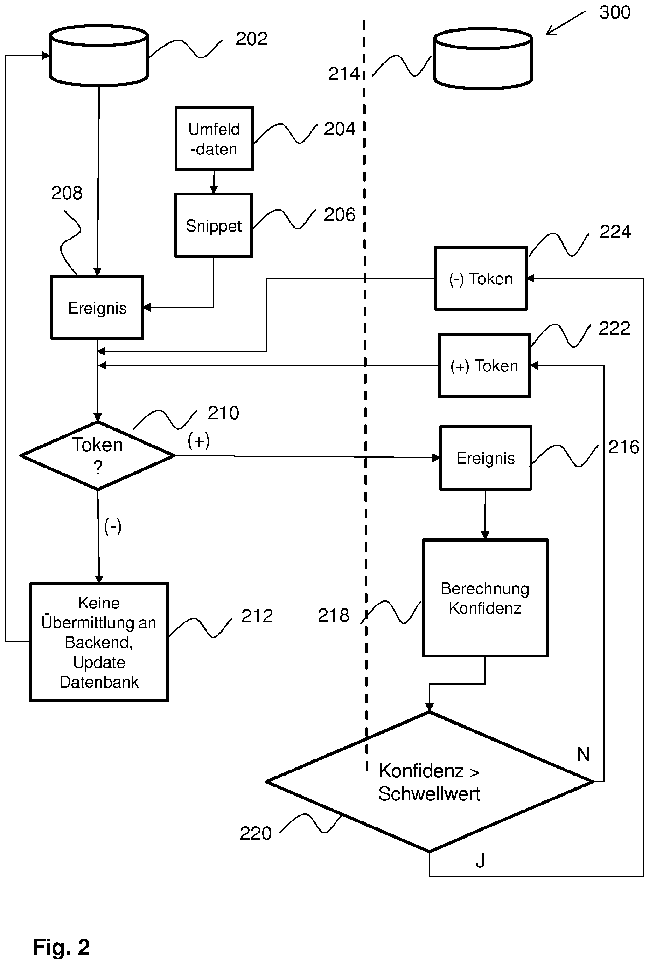

Es wird angenommen, dass das Verkehrszeichen 108 von einer Vielzahl von Fahrzeugen passiert wird. Da jedes dieser Fahrzeuge das neue aufgestellte Verkehrszeichen 108 als Ereignis detektiert, würde sich ein sehr große Datenmenge im Uplink zur Backendeinrichtung 102 ergeben, wenn dieses Ereignis durch jedes Fahrzeug in Form von Aktualisierungsdaten an die Backendeinrichtung 102 kommunizieren würde. Im Folgenden wird daher ein Token-basiertes Protokoll zur Kommunikation der Aktualisierungsdaten mit Bezug auf Fig. 2, 3 und 4 beschrieben.

Fig. 2 zeigt ein Flussdiagramm 200 des Protokolls für das Auftreten eines Ereignisses. Im Defaultmodus liegt für einen bestimmten räumlichen Bereich der digitalen Karte noch kein Ereignis vor. Die fahrzeugseitige Datenbank 202 beinhaltet einen Ausschnitt der gesamten digitalen Karte der serverseitigen Datenbank 200. Die serverseitige Datenbank 200 enthält ein Umfeldmodell, insbesondere eine hochauflösende digitale Landkarte mit weiteren Umfeldelementen. Die digitale Landkarte wird zumindest durch ein Strassenmodell gebildet, welches den Verlauf von Strecken und Fahrspuren beschreibt, und Informationen über Anzahl und Verlauf von Fahrstreifen, Kurvenradien, Steigungen, Kreuzungen und ähnliche Charakteristiken enthält. Das Umfeldmodell kann insbesondere weitere statische Umfeldelemente umfassen. Statische Umfeldelemente betreffen Informationen über Position und Art von Fahrbahn- und Linienmarkierungen, etwa Haltelinien, Zebrastreifen, Mittelstreifen, Fahrbahnrandmarkierungen und ähnliches, das Vorhandensein von Randbebauungen, sowie deren Klasse und relative oder absolute Position, Information über Position und Art von Verkehrszeichen, oder Informationen über Art und Zustand von Lichtsignalanlagen oder Wechselverkehrszeichen.

Ein fahrzeugseitiger Sensor erfasst Fahrzeugumfelddaten, siehe Schritt 204. Aus den Fahrzeugumfelddaten wird durch einen oder mehrere fahrzeugseitige Prozessoren 206 ein Snippet berechnet. Das Snippet enthält das Verkehrsschild 108, siehe Fig. 1, welches vor kurzem aufgestellt wurde. Durch Vergleich, d.h. durch Differenzbildung zwischen den Objekten in der fahrzeugseitigen Datenbank 202 und dem Snippet 206 wird das Verkehrszeichen 108 als Ereignis identifiziert. Es wird in Schritt 210 ermittelt, ob für dieses Ereignis, d.h. für den räumlichen Bereich, in welchem das Ereignis aufgetreten ist, ein positives Token vorliegt. Für räumliche Bereiche, in welchem sich die fahrzeugseitige Datenbank 202 im Defaultmodus befindet, ist dies der Fall, da der Defaultmodus durch positive Token emuliert wird. Da angenommen wird, dass das Ereignis 208 noch nicht in der serverseitigen Datenbank 214 vorliegt, befindet sich die fahrzeugseitige Datenbank für den entsprechenden räumlichen Bereich im Defaultmodus. In diesem Fall wird das Ereignis 308 an die Backendeinrichtung übermittelt und liegt dort als Ereignis 216 nach Empfang vor. Backendseitig wird das Ereignis mit einer eindeutigen Identifikation (ID) versehen, so dass es identifizierbar ist. Backendseitig wird anhand der Anzahl der Übermittlungen des Ereignisses von ggfs. unterschiedlichen Fahrzeugen ein Konfidenzwert für das Ereignis bestimmt und anhand des Konfidenzwertes eine bestimmte Anzahl positiver Token 222 und negativer Token 224 erzeugt. Insbesondere werden nur positive Token erzeugt, wenn der Konfidenzwert unterhalb des Schwellwertes liegt und nur negative Token erzeugt, wenn der Konfidenzwert oberhalb des Schwellwertes liegt. Befände sich die fahrzeugseitige Datenbank 202 nicht im Defaultmodus oder läge kein positives Token vor, so würde keine Übermittlung des Ereignisses an die Backendeinrichtung vorgenommen und stattdessen würde die fahrzeugseitige Datenbank 202 aktualisiert. Dadurch, dass für das Ereignis positive und negative Token erzeugt wurden, geht die fahrzeugseitige Datenbank 202 vom Defaultmodus in den Ereignismodus über, in welchem lediglich Fahrzeuge mit positivem Token das Ereignis an das Backend übermitteln dürfen, hingegen Fahrzeuge mit negativem Token das Ereignis nicht an das Backend übermitteln dürfen. Im Ereignismodus wird zudem fortlaufend überprüft, ob das Ereignis weggefallen ist.

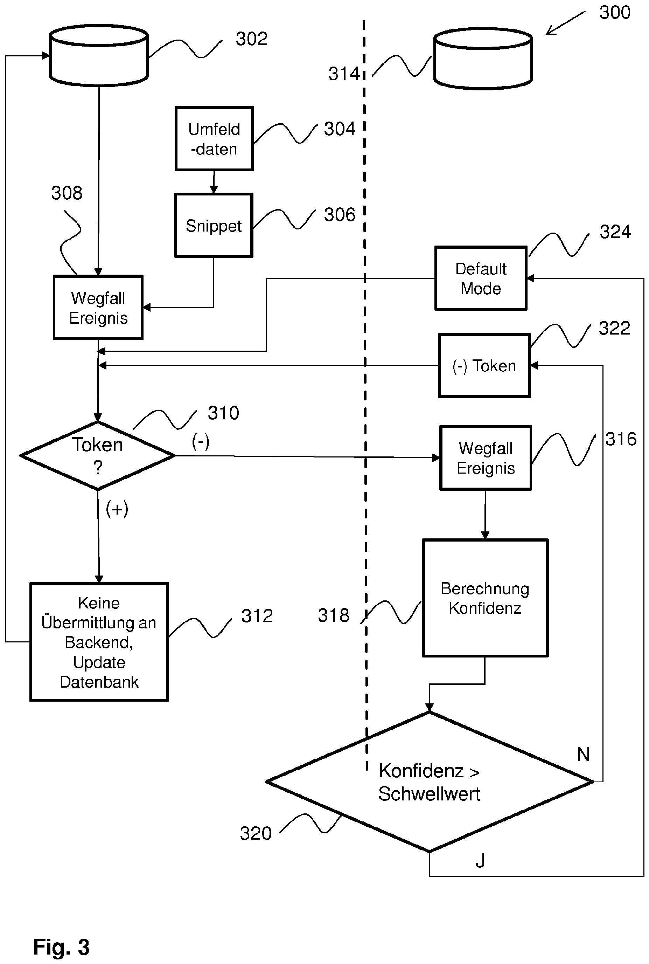

Ein Flussdiagram des Protokolls für den Fall des Wegfalls des Ereignisses ist in Fig. 3 dargestellt. In der fahrzeugseitigen Datenbank 302 ist das Ereignis, d.h. das Vorhandensein des in Fig. 1 gezeigten Verkehrsschildes 108, in Form von Objektdaten gespeichert. Ein fahrzeugseitiger Sensor erfasst Fahrzeugumfelddaten, siehe Schritt 304. Aus den Fahrzeugumfelddaten wird durch einen oder mehrere fahrzeugseitige Prozessoren ein Snippet 306 berechnet. Es wird angenommen, dass das Snippet das Verkehrsschild 108, siehe Fig. 1 nun nicht mehr enthält, da es bspw. entfernt wurde. Durch Vergleich, d.h. durch Differenzbildung zwischen den Objekten in der fahrzeugseitigen Datenbank 302 und dem Snippet 306 wird das nun nicht mehr vorhandene Verkehrszeichen 108 als Wegfall des Ereignisses identifiziert, siehe Schritt 308. In Schritt 310 wird überprüft, ob ein positives oder negatives Token in Bezug auf das Ereignis vorliegt. Liegt ein positives Token vor, so wird der Wegfall nicht an das Backend übermittelt, sondern es wird die fahrzeugseitige Datenbank 302 aktualisiert. Liegt hingegen ein negatives Token vor, so wird der Wegfall des Ereignisses an das Backend kommuniziert und liegt dort als Wegfall des Ereignisses 316 vor. Backendseitig wird anhand der Anzahl der Übermittlungen des Ereignisses von ggfs. unterschiedlichen Fahrzeugen ein Konfidenzwert für den Wegfall des Ereignisses bestimmt und anhand des Konfidenzwertes eine bestimmte Anzahl negativer Token 322 oder eine Nachricht, welche die fahrzeugseitige Datenbank 302 in den Defaultmodus zurückversetzt, erzeugt. Insbesondere werden nur negative Token erzeugt, wenn der Konfidenzwert unterhalb des Schwellwertes liegt. Es wird hingegen die Nachricht für den Defaultmodus erzeugt, wenn der Konfidenzwert oberhalb des Schwellwertes liegt, siehe Schritt 320. Auf diese Weise wird sichergestellt, dass die fahrzeugseitige Datenbank 302 nur dann in den Defaultmodus bezogen auf die räumliche Position des Ereignisses überführt, wenn der Wegfall des Ereignisses durch eine hinreichend hohe Anzahl an Bestätigungen vertrauenswürdig ist. Die Übermittlung kann mittels Broadcast erfolgen. Hierzu wird die räumliche Position des Ereignisses auf Radiozellen abgebildet und Nachrichten an die entsprechende Radiozelle übermittelt.

## Patentansprüche

1. System (100) zur Erzeugung und/oder Aktualisierung eines digitalen Modells zumindest eines Teilbereichs einer digitalen Karte,
das System fahrzeugseitig aufweisend:
eine Fahrzeugdatenbank (118) mit fahrzeugseitigen Kartendaten, welche zumindest einen Teilbereich der digitalen Karte abbilden;
einen oder mehrere Sensoren (106) zur Erfassung von Fahrzeugumfelddaten
einen oder mehrere Prozessoren (120), welche eingerichtet sind, aus den Fahrzeugumfelddaten zumindest ein Snippet (206, 306) zu erzeugen sowie aus dem Snippet Aktualisierungsdaten des Teilbereichs der digitalen Karte zu ermitteln, wenn ein Ereignis in Form einer Differenz zwischen Objekten in den Kartendaten und Objekten in dem Snippet vorliegt;
Mittel zur Bestimmung einer räumlichen Position des Ereignisses;
eine Sende- und Empfangseinrichtung (116), welche eingerichtet ist, ein positives Token (222) oder ein negatives Token (224) von einer Backendeinrichtung (102) zu empfangen und an die Fahrzeugdatenbank zu übermitteln, und welche ferner eingerichtet ist, die Aktualisierungsdaten mit dem Ereignis und zugehöriger räumlicher Position an die Backendeinrichtung zu übermitteln, wenn sich die fahrzeugseitige Datenbank in Bezug auf die räumliche Position des Ereignisses in einem Standardmodus befindet oder wenn im Speicher ein positives Token vorliegt; und
das System backendseitig aufweisend eine Backendeinrichtung mit:
einer Serverdatenbank (122) mit backendseitigen Kartendaten des digitalen Modells;
einer Sende-/Empfangseinrichtung (126), welche eingerichtet ist, die Aktualisierungsdaten von einem oder mehreren Fahrzeugen (104) zu empfangen
einem oder mehreren Prozessoren (124), welche eingerichtet sind, die Aktualisierungsdaten statistisch zu bewerten und in Abhängigkeit der statistischen Bewertung eine Aktualisierung der backendseitigen Kartendaten vorzunehmen und in Abhängigkeit der statistischen Bewertung eine bestimmte Anzahl positiver und negative Token zu erzeugen;
wobei die einen oder mehreren Prozessoren der Backendeinrichtung eingerichtet sind, positive und negative Token zu erzeugen, wenn die Aktualisierungsdaten eine statistische Signifikanz aufweisen, die einen Mindestschwellwert überschreiten, wobei den positiven und negativen Token zumindest die räumliche Position des betreffenden Ereignisses und eine Ereignis-ID des betreffenden Ereignisses zugeordnet wird; und wobei die Sende-/Empfangseinrichtung der Backendeinrichtung eingerichtet ist, die positiven und negativen Token an ein oder mehrere Fahrzeuge zu übermitteln; und
wobei die einen oder mehreren fahrzeugseitigen Prozessoren eingerichtet sind, den Wegfall des Ereignisses mit einer bestimmten räumlichen Position und zugeordneten Ereignis-ID zu detektieren, wenn eine negative Differenz zwischen Objekten in den Kartendaten und Objekten im Snippet vorliegt; und wobei die fahrzeugseitige Sende-/Empfangseinrichtung eingerichtet ist, den Wegfall des Ereignisses in Form von Aktualisierungsdaten an die Backendeinrichtung zu übermitteln, wenn im fahrzeugseitigen Speicher ein negatives Token vorliegt.

2. System nach Anspruch 1, wobei die einen oder mehreren Prozessoren jedes Fahrzeuges ferner eingerichtet sind, die Aktualisierungsdaten statistisch zu bewerten, wobei in Abhängigkeit der Güte der Aktualisierungsdaten diesen ein Konfidenzwert oder ein statistischer Parameter zugeordnet wird, und wobei die Sende-/Empfangseinrichtung jedes Fahrzeuges eingerichtet ist, den Konfidenzwert oder den statistischen Parameter als Zusatzdaten zusätzlich zu den Aktualisierungsdaten an die Backendeinrichtung zu übermitteln.

3. System nach Anspruch 1 oder 2, wobei die einen oder mehreren Prozessoren der Backendeinrichtung eingerichtet sind, die Aktualisierungsdaten anhand der Anzahl der Fahrzeuge, welche die Aktualisierungsdaten übermittelt haben, und/oder der Anzahl der Übermittlungen statistisch zu bewerten und basierend auf der Anzahl der Fahrzeuge und/oder der Übermittlungen den Aktualisierungsdaten einen Konfidenzwert zuzuordnen.

4. System nach Anspruch 2, wobei die einen oder mehreren Prozessoren der Backendeinrichtung eingerichtet sind, die Aktualisierungsdaten anhand der Anzahl der Fahrzeuge, welche die Aktualisierungsdaten übermittelt haben, und/oder der Anzahl der Übermittlungen, und anhand der Zusatzdaten zu bewerten.

5. System nach Anspruch 4, wobei die einen oder mehreren Prozessoren der Backendeinrichtung eingerichtet sind, eine Nachricht zu erzeugen, um die fahrzeugseitige Datenbank in den Standardmodus bezüglich der räumlichen Position und Ereignis-ID des Ereignisses, welches weggefallen ist, zu versetzen, wenn die Aktualisierungsdaten eine statistische Signifikanz aufweisen, die einen Mindestschwellwert überschreitet; und wobei die Sende-/Empfangseinrichtung der Backendeinrichtung eingerichtet ist, die Nachricht an ein oder mehrere Fahrzeuge zu übermitteln.

6. System nach Anspruch 4, wobei die einen oder mehreren fahrzeugseitigen Prozessoren eingerichtet sind, positive oder negative Token bezüglich der räumlichen Position und/oder Ereignis-ID aus dem fahrzeugseitigen Speicher zu entfernen.

7. System nach einem der Ansprüche 1 bis 6, wobei die Sende- und Empfangseinrichtung der Backendeinrichtung ferner eingerichtet ist, die positiven oder negativen Token an ein oder mehrere Fahrzeuge zu übermitteln, welche sich in räumlicher Nähe zu dem Ereignis befinden.

8. System nach einem der Ansprüche 3 bis 7, wobei die einen oder mehreren backendseitigen Prozessoren eingerichtet sind, die Serverdatenbank mit backendseitigen Kartendaten des digitalen Modells mit den Aktualisierungsdaten zu aktualisieren, wenn diese einen Konfidenzwert aufweisen, der einen Mindestschwellwert überschreitet, und wobei die backendseitige Sende/Empfangseinrichtung eingerichtet ist, zumindest die Daten der aktualisierten Datenbank, welche sich auf das Ereignis beziehen, an Fahrzeuge zu übermitteln, die sich in räumlicher Nähe zu dem Ereignis befinden.

## Claims

1. System (100) for generating and/or updating a digital model of at least one sub-region of a digital map,
said system comprising on the vehicle side:
a vehicle database (118) with vehicle-side map data which image at least one sub-region of the digital map;
one or more sensors (106) for capturing vehicle surroundings data;
one or more processors (120) which are configured to generate at least one snippet (206, 306) from the vehicle surroundings data and to determine, from the snippet, updating data of the sub-region of the digital map if an event occurs in the form of a difference between objects in the map data and objects in the snippet;
means for determining a spatial position of the event;
a transceiver (116) which is configured to receive a positive token (222) or a negative token (224) from a backend device (102) and to forward said token to the vehicle database, and which is also configured to forward the updating data with the event and associated spatial position to the backend device when the vehicle-side database is in a default mode in relation to the spatial position of the event or when a positive token exists in the memory; and
the system having a backend device on the backend side, with:
a server database (122) with backend-side map data of the digital model;
a transceiver (126) which is configured to receive the updating data from one or more vehicles (104); one or more processors (124) which are configured to statistically evaluate the updating data and to perform an update of the backend-side map data depending on the statistical evaluation and to generate a certain number of positive and negative tokens depending on the statistical evaluation; wherein the one or more processors of the backend device are configured to generate positive and negative tokens if the updating data have a statistical significance that exceeds a minimum threshold, wherein the positive and negative tokens are assigned at least the spatial position of the associated event and an event ID of the associated event; and wherein the transceiver of the backend device is configured to forward the positive and negative tokens to one or more vehicles; and
wherein the one or more vehicle-side processors are configured to detect the discontinuation of the event with a specific spatial position and assigned event ID if a negative difference exists between objects in the map data and objects in the snippet; and wherein the vehicle-side transceiver is configured to forward the discontinuation of the event in the form of updating data to the backend device if a negative token is present in the vehicle-side memory.

2. System according to Claim 1, wherein the one or more processors of each vehicle are further configured to statistically evaluate the updating data, wherein, depending on the quality of the updating data, a confidence value or a statistical parameter is assigned to said data, and wherein the transceiver of each vehicle is configured to forward the confidence value or the statistical parameter to the backend device as additional data in addition to the updating data.

3. System according to Claim 1 or 2, wherein the one or more processors of the backend device are configured to statistically evaluate the updating data based on the number of vehicles that have forwarded the updating data and/or on the number of transfers, and to assign a confidence value to the updating data based on the number of vehicles and/or transfers.

4. System according to Claim 2, wherein the one or more processors of the backend device are configured to evaluate the updating data based on the number of vehicles that have forwarded the updating data and/or on the number of transfers and on the basis of the additional data.

5. System according to Claim 4, wherein the one or more processors of the backend device are configured to generate a message in order to place the vehicle-side database in the default mode with respect to the spatial position and event ID of the event which has ceased, if the updating data have a statistical significance that exceeds a minimum threshold value; and wherein the transceiver of the backend is configured to forward the message to one or more vehicles.

6. System according to Claim 4, wherein the one or more vehicle-side processors are configured to remove positive or negative tokens with respect to the spatial position and/or event ID from the vehicle-side memory.

7. System according to any one of Claims 1 to 6, wherein the transceiver of the backend device is further configured to forward the positive or negative tokens to one or more vehicles which are located within the spatial proximity of the event.

8. System according to any one of Claims 3 to 7, wherein the one or more backend-side processors are configured to update the server database containing backend-side map data of the digital model with the updating data if the latter have a confidence value that exceeds a minimum threshold value, and wherein the backend-side transceiver is configured to forward at least the data from the updated database which relate to the event to vehicles which are located within the spatial proximity of the event.

## Revendications

1. Système (100) destiné à générer et/ou actualiser un modèle numérique d'au moins une sous-zone d'une carte numérique, le système comportant côté véhicule :
une base de données de véhicules (118) comprenant des données cartographiques côté véhicule qui représentent au moins une sous-zone de la carte numérique ;
un ou plusieurs capteurs (106) destinés à acquérir des données d'environnement de véhicule ;
un ou plusieurs processeurs (120) qui sont adaptés pour générer au moins un extrait de code (Snippet) (206, 306) à partir des données d'environnement de véhicule et pour déterminer des données d'actualisation de la sous-zone de la carte numérique à partir de l'extrait de code en présence d'un événement sous la forme d'une différence entre des objets dans les données cartographiques et des objets dans l'extrait de code ;
des moyens destinés à déterminer une position spatiale de l'événement ;
un dispositif d'envoi et de réception (116) qui est conçu pour recevoir un jeton positif (222) ou un jeton négatif (224) d'un dispositif dorsal (102) et pour le transmettre à la base de données de véhicules, et qui est également conçu pour transmettre les données d'actualisation avec l'événement et la position spatiale associée au dispositif dorsal si la base de données côté véhicule est dans un mode standard par rapport à la position spatiale de l'événement ou s'il y a un jeton positif dans la mémoire ; et
le système comportant du côté dorsal un dispositif dorsal comprenant :
une base de données de serveur (122) pourvue de données cartographiques côté dorsal du modèle numérique ;
un dispositif d'émission/réception (126) qui est conçu pour recevoir les données d'actualisation d'un ou plusieurs véhicules (104),
un ou plusieurs processeurs (124) qui sont conçus pour évaluer statistiquement les données d'actualisation et pour effectuer, en fonction de l'évaluation statistique, une actualisation des données de la carte côté dorsal et pour générer, en fonction de l'évaluation statistique, un nombre déterminé de jetons positifs et négatifs ;
le ou les processeurs du dispositif dorsal étant conçus pour générer des jetons positifs et négatifs si les données d'actualisation présentent une différence significative statistique qui dépasse une valeur de seuil minimale, les jetons positifs et négatifs étant associés au moins à la position spatiale dudit événement et à un identifiant dudit événement ; et le dispositif d'émission/réception du dispositif dorsal étant conçu pour transmettre les jetons positifs et négatifs à un ou plusieurs véhicules ; et
le ou les processeurs côté véhicule étant conçus pour détecter l'élimination de l'événement ayant une position spatiale déterminée et un identifiant d'événement associé s'il y a une différence négative entre des objets dans les données cartographiques et des objets dans l'extrait de code ; et le dispositif d'émission/réception côté véhicule étant conçu pour transmettre l'élimination de l'événement sous la forme de données d'actualisation au dispositif dorsal s'il y a un jeton négatif dans la mémoire côté véhicule.

2. Système selon la revendication 1, le ou les processeurs de chaque véhicule étant également conçus pour évaluer statistiquement les données d'actualisation, une valeur de confiance ou un paramètre statistique étant associé aux données d'actualisation en fonction de la qualité de celles-ci, et le dispositif d'émission/réception de chaque véhicule étant conçu pour transmettre au dispositif dorsal la valeur de confiance ou le paramètre statistique en tant que données supplémentaires en plus des données d'actualisation.

3. Système selon la revendication 1 ou 2, le ou les processeurs du dispositif dorsal étant conçus pour évaluer statistiquement les données d'actualisation en fonction du nombre de véhicules, qui ont transmis les données d'actualisation, et/ou le nombre de transmissions et pour associer une valeur de confiance aux données d'actualisation en fonction du nombre de véhicules et/ou de transmissions.

4. Système selon la revendication 2, le ou les processeurs du dispositif dorsal étant conçus pour évaluer les données d'actualisation sur la base du nombre de véhicules, qui ont transmis les données d'actualisation, et/ou du nombre de transmissions et sur la base des données supplémentaires.

5. Système selon la revendication 4, le ou les processeurs du dispositif dorsal étant conçus pour générer un message afin de basculer la base de données côté véhicule en mode standard en ce qui concerne la position spatiale et l'identifiant de l'événement qui est éliminé, si les données d'actualisation présentent un différence significative statistique qui dépasse une valeur de seuil minimale ; et le dispositif d'émission/réception du dispositif dorsal étant conçu pour transmettre le message à un ou plusieurs véhicules.

6. Système selon la revendication 4, le ou les processeurs côté véhicule étant conçus pour supprimer de la mémoire côté véhicule les jetons positifs ou négatifs relatifs à la position spatiale et/ou à l'identifiant d'événement.

7. Système selon l'une des revendications 1 à 6, le dispositif d'émission et de réception du dispositif dorsal étant en outre conçu pour transmettre les jetons positifs ou négatifs à un ou plusieurs véhicules qui sont à proximité immédiate de l'événement.

8. Système selon l'une des revendications 3 à 7, le ou les processeurs dorsaux étant conçus pour actualiser la base de données du serveur pourvue de données cartographiques côté dorsal du modèle numérique avec les données d'actualisation si celles-ci ont une valeur de confiance qui dépasse une valeur de seuil minimale, et le dispositif d'émission/réception dorsal étant conçu pour transmettre au moins les données de la base de données actualisée, qui concernent l'événement, à des véhicules qui sont à proximité spatiale de l'événement.
